# EUROPÄISCHE PATENTSCHRIFT

(11) **EP 4 190 642 B1**
(45) Veröffentlichungstag und Bekanntmachung des Hinweises auf die Patenterteilung: **29.01.2025**
(21) Anmeldenummer: 22204051.1
(22) Anmeldetag: 27.10.2022
(51) Int. Cl.: B60R 11/04

(54) **SENSORVORRICHTUNG ZUR BEFESTIGUNG AN DER INNENSEITE EINER FAHRZEUGSCHEIBE**
SENSOR DEVICE FOR FASTENING TO THE INTERIOR OF A VEHICLE WINDOW PANE
DISPOSITIF DE CAPTEUR DESTINÉ À ÊTRE FIXÉ À L'INTÉRIEUR D'UNE VITRE DE VÉHICULE

(30) Priorität: 01.12.2021 DE 102021213633
(43) Veröffentlichungstag der Anmeldung: 07.06.2023
(73) Patentinhaber: Continental Automotive Technologies GmbH, 30175 Hannover (DE)
(72) Erfinder: Granzow, Oliver, 60488 Frankfurt am Main (DE); Griese, Oliver, 60488 Frankfurt am Main (DE); Miethig, Werner, 60488 Frankfurt am Main (DE); Giuchici, Marius, 60488 Frankfurt am Main (DE); Macovei, Paul Adrian, 60488 Frankfurt am Main (DE)
(74) Vertreter: Continental Corporation

(56) Entgegenhaltungen:
- WO-A1-2021/112636
- CN-A- 108 312 979
- CN-A- 110 077 333
- KR-B1- 100 661 051

## Beschreibung

Die Erfindung bezieht sich auf eine Sensorvorrichtung zur Befestigung an der Innenseite einer Fahrzeugscheibe eines Kraftfahrzeugs, mit einem mit der Fahrzeugscheibe verbindbaren Halter, mit einem schwenkbar mit dem Halter verbundenen Träger und mit einer an dem Träger angeordneten Sensoreinheit, wobei der Träger um einen einstellbaren Schwenkwinkel gegenüber dem Halter um eine Trägerschwenkachse verschwenkbar ist und wobei der Schwenkwinkel mittels einer Fixiereinrichtung arretierbar ist.

Heutige Kraftfahrzeuge, und zwar sowohl Personenkraftwagen als auch Nutzfahrzeuge, weisen regelmäßig eine Vielzahl von Sensorvorrichtungen auf. Unter diesen sind Sensorvorrichtungen, die an einer Frontscheibe des Kraftfahrzeugs angeordnet sind. Aufgrund einer Vielzahl von verschiedenen Fahrzeugtypen, die Frontscheiben unterschiedlicher Scheibenkrümmungen und/oder Scheibenneigungen aufweisen, ist es erforderlich, zur ordnungsgemäßen Montage der Sensorvorrichtung in einem Kraftfahrzeug an den jeweiligen Fahrzeugtyp angepasste Gehäuse vorzusehen, um die unterschiedlichen Scheibenkrümmungen und/oder Scheibenneigungen auszugleichen.

Um die Variantenanzahl solcher Gehäuse oder entsprechender Halter für die verschiedenen Fahrzeugtypen gering zu halten, ist eine eingangs genannte Sensorvorrichtung bekannt, bei welcher der Träger gegenüber dem Halter verschwenkbar und der Schwenkwinkel mittels einer Mehrzahl von alternativ zu verwendenden Befestigungsausnehmungen arretierbar ist. Nachteilig ist dabei, dass der Schwenkwinkel aufgrund der begrenzten Anzahl an Befestigungsausnehmungen nur nach einem groben vorgegebenen Winkelraster arretierbar ist.

Aus CN 110 077 333 A ist eine Sensorvorrichtung nach dem Oberbegriff von Anspruch 1 mit einer Kamera bekannt. Die Sensorvorrichtung ist an einer Windschutzscheibe eines Fahrzeugs befestigbar und weist eine Einstelleinrichtung auf, mittels welcher eine Winkelstellung der Kamera verstellbar ist. Die Einstelleinrichtung weist ein Getriebe mit einem Schneckenrad und einer Schnecke auf.

Aufgabe der Erfindung ist es, eine Sensorvorrichtung der eingangs genannten Art zu schaffen, die eine besonders präzise Verschwenkbarkeit des Trägers gegenüber dem Halter ermöglicht und gewährleistet.

Diese Aufgabe wird erfindungsgemäß gelöst mit einer Sensorvorrichtung nach Anspruch 1.

Von besonderem Vorteil bei der Erfindung ist, dass mittels des Schneckengetriebes grundsätzlich stufenlos der Schwenkwinkel eingestellt werden kann. Damit kann der Träger und mit diesem die Sensoreinheit besonders präzise an und gegenüber dem Kraftfahrzeug ausgerichtet werden. Das ist besonders vorteilhaft für Sensoreinheiten mit zunehmend größerer Reichweite, da bei diesen bereits kleinste Änderungen des Schwenkwinkels des Trägers gegenüber dem Halter zu nennenswerten Abweichungen in den mit der Sensoreinheit gewonnenen Messergebnissen führen können. Zusätzlich ist bei einer selbsthemmenden Ausführung des Schneckengetriebes in einfacher Weise eine zuverlässige Fixierung und Arretierung des Schwenkwinkels möglich. So kann bereits eine Selbsthemmung des Schneckengetriebes vorteilhaft ein Arretieren des Schwenkwinkels bewirken.

Die Fahrzeugscheibe, an welcher die erfindungsgemäße Sensorvorrichtung anbringbar ist, ist insbesondere eine Windschutzscheibe oder Frontscheibe des Kraftfahrzeugs; grundsätzlich ist es aber auch denkbar, dass die Sensorvorrichtung zur Anbringung an einer Heckscheibe oder gegebenenfalls an einer Seitenscheibe des Kraftfahrzeugs vorgesehen ist. Dabei ist die Sensorvorrichtung ausgebildet, an der Fahrzeugscheibe, insbesondere Windschutzscheibe, befestigt zu werden. Zur Verbindung von Fahrzeugscheibe und Sensorvorrichtung kann insbesondere eine Verklebung vorgesehen sein, d. h. der Halter ist mit der Fahrzeugscheibe verklebbar. Hierzu weist der Halter vorzugsweise eine Fahrzeugscheibenverbindungsfläche auf. Diese Fläche des Halters wird dann mit der Fahrzeugscheibe verbunden, insbesondere mit der Fahrzeugscheibe verklebt.

Der Träger der Sensorvorrichtung ist gemeinsam mit der Sensoreinheit um die Trägerschwenkachse verschwenkbar. Vorzugsweise ist die Trägerschwenkachse parallel zu der Fahrzeugscheibe ausgerichtet.

Das Schneckengetriebe der Fixiereinrichtung kann grundsätzlich ein beliebiges Schneckengetriebe, z. B. ein Stirnradschneckengetriebe, sein. Die Rotationsachse des Schneckenrades des Schneckengetriebes stimmt mit der Trägerschwenkachse, d. h. der Schwenkachse zwischen Träger und Halter, überein.

Mit der erfindungsgemäßen Sensorvorrichtung ist eine besonders präzise, grundsätzlich stufenlose Verschwenk- und Einstellbarkeit der an dem Träger angeordneten Sensoreinheit gegenüber dem Halter und somit - im eingebauten Zustand der Sensorvorrichtung in das Kraftfahrzeug - auch gegenüber der Fahrzeugscheibe und dem Kraftfahrzeug insgesamt ermöglicht. Der Schwenkwinkel zwischen Träger und Halter ist grundsätzlich und vorzugsweise mit beliebigen Zwischenstufen einstellbar. Zudem ermöglicht die Erfindung eine besonders kompakte Fixiereinrichtung, die nur einen vergleichsweise kleinen Bauraum erfordert, wodurch die Sensorvorrichtung insgesamt besonders bauraumsparend ausgebildet sein kann. Dies ist von besonderem Vorteil, da in der Regel jede Verringerung des für die Sensorvorrichtung erforderlichen Bauraums zu einer Verbesserung der Sicht eines Fahrzeugführers durch die Fahrzeugscheibe führt und somit zusätzlich zu einer weiteren Erhöhung der Verkehrssicherheit beiträgt.

Die erfindungsgemäße Sensorvorrichtung ermöglicht vorteilhaft eine einfache Anpassung an verschiedene Fahrzeugtypen. Eine große Anzahl verschiedener, an jeweils einen bestimmten Fahrzeugtyp angepasste Sensorvorrichtungsvarianten ist nicht erforderlich. Dadurch werden sowohl die Herstellungs- als auch die weiteren Kosten, wie z. B. Lagerkosten, reduziert. Das ist insbesondere im Nutzfahrzeugbereich von besonderem Vorteil, da die Typenvielfalt an Nutzfahrzeugen besonders hoch ist und die Stückzahlen einzelner Fahrzeugtypen zum Teil sehr gering sind. Hier kann die erfindungsgemäße Sensorvorrichtung kostengünstig eingesetzt werden, d. h. als Sensorvorrichtung zur Befestigung an der Innenseite einer Fahrzeugscheibe eines Kraftfahrzeugs, welches ein Nutzfahrzeug ist.

Zusammenfassend ermöglicht die Erfindung ein Befestigen und Justieren von Sensoreinheiten an Fahrzeugscheiben, insbesondere Windschutzscheiben, verschiedenster Art. Die Scheiben können sich z. B. in Größe und/oder Krümmung und/oder Anstellwinkel unterscheiden. Mit der erfindungsgemäßen Sensorvorrichtung kann eine Variantenreduzierung in der Fertigung erreicht werden. Damit geht vorteilhaft eine erhebliche Kostenreduzierung, insbesondere bei kleinen Stückzahlen, für die Sensorvorrichtung einher. Zudem ist beispielsweise für einen neuen Fahrzeugtyp in kurzer Zeit eine geeignete Sensorvorrichtung verfügbar.

Vorteilhafte Weiterbildungen der Erfindung sind in den Unteransprüchen angegeben.

Für eine besonders stabile mechanische Ausgestaltung der Sensorvorrichtung ist es von besonderem Vorteil, wenn gemäß einer Weiterbildung der Erfindung die Schnecke an dem Halter und das Schneckenrad an dem Träger angeordnet ist. Vorzugsweise ist die Schnecke ortsfest an dem Halter und das Schneckenrad insbesondere starr an dem Träger angeordnet.

Gemäß einer anderen vorteilhaften Weiterbildung der Erfindung ist das Schneckenrad einteilig mit dem Träger ausgebildet. Auf diese Weise kann der Aufbau der Sensorvorrichtung weiter vereinfacht und die Bauteilanzahl verringert werden. Die einteilige Ausbildung des Schneckenrades mit dem Träger bedeutet, dass Schneckenrad und Träger einstückig, ein einziges Bauteil bildend gestaltet sind. Beispielsweise können Träger und Schneckenrad ein einziges Kunststoffspritzgussbauteil bilden.

Vorteilhaft werden das Gewicht und der erforderliche Bauraum der Sensorvorrichtung zusätzlich reduziert, wenn gemäß einer anderen Weiterbildung der Erfindung das Schneckenrad als Schneckenradsegment ausgebildet ist. Dabei ist das Schneckenrad nicht als vollständige Kreisfläche, sondern als Kreissektor, auch bezeichnet als Kreisausschnitt, ausgebildet.

Gemäß einer anderen vorteilhaften Weiterbildung der Erfindung weist der Halter eine Lagerung mit einer von einer ersten Aufnahme gebildeten ersten Lagerstelle und einer von einer zweiten Aufnahme gebildeten zweiten Lagerstelle auf, wobei die Schnecke in der Lagerung drehbar gelagert ist. Die zwei Lagerstellen definieren somit eine Lagerachse, welche mit der Schneckenachse der Schnecke übereinstimmt. Mit den beiden Lagerstellen des Halters ist vorteilhaft eine dauerhaft exakte Lagerung für die Schnecke zur Verfügung gestellt.

Gemäß einer anderen vorteilhaften Weiterbildung der Erfindung ist die Schnecke senkrecht zu einer Fahrzeugscheibenverbindungsfläche des Halters angeordnet. In einem in das Kraftfahrzeug eingebauten Zustand der Sensorvorrichtung ist die Schnecke somit auch in Bezug auf die Fahrzeugscheibe senkrecht angeordnet. Mit der senkrechten Anordnung der Schnecke wird nicht nur ein zuverlässiger Aufbau der Sensorvorrichtung erreicht, sondern es wird zudem eine besonders einfache Erreichbarkeit der Schnecke bei einem Einstellen des Schwenkwinkels des Trägers gegenüber dem Halter ermöglicht.

Insbesondere für eine dauerhafte Sicherstellung eines eingestellten Schwenkwinkels zwischen Träger und Halter auch im späteren Betrieb der Sensorvorrichtung in ihrem eingebauten Zustand in dem Kraftfahrzeug ist es von Vorteil, dass gemäß der Erfindung zwischen Halter und Schnecke eine Rasteinrichtung zu einem radialen Fixieren der Schnecke angeordnet ist. Das radiale Fixieren der Schnecke bedeutet deren rotatorische Fixierung bezogen auf die Schneckenachse und sichert die Schnecke besonders zuverlässig gegenüber einem unbeabsichtigten Verdrehen.

Gemäß einer vorteilhaften Weiterbildung der Erfindung weist die Rasteinrichtung eine an dem Halter angeordnete Rastfeder sowie mehrere, an der Schnecke radial um die Schneckenachse angeordnete Rastelemente auf. Die Rastfeder kann vorteilhaft einstückig, ein einziges Bauteil bildend mit dem Halter ausgeführt sein. Die Rastelemente können z. B. Rastausnehmungen oder Rastnocken sein.

Eine im Aufbau besonders einfache und zuverlässige Rasteinrichtung wird erreicht, wenn gemäß einer Weiterbildung der Erfindung die Rastelemente, d. h. beispielsweise die Rastausnehmungen bzw. Rastnocken, an der Schnecke axial ausgerichtet sind und wenn die Rastfeder und zumindest eines der Rastelemente zum radialen Fixieren der Schnecke miteinander in Eingriff sind.

Gemäß einer anderen vorteilhaften Weiterbildung der Erfindung ist an dem Halter eine Haltefeder zu einem axialen Festlegen der Schnecke angeordnet, wobei Halterfeder und Schnecke derart zueinander angeordnet sind, dass die Haltefeder eine die Schnecke an einen Axialanschlag anlegende Axialkraft auf die Schnecke ausübt. Der Axialanschlag kann z. B. Bestandteil der ersten oder der zweiten Lagerstelle sein oder an einer dieser Lagerstellen ausgebildet sein. Die von der Haltefeder auf die Schnecke ausgeübte Axialkraft wirkt als solche in Richtung der Schneckenachse der Schnecke.

Für eine einfache Montage und gegebenenfalls Auswechselbarkeit der Sensoreinheit an dem Träger ist es von besonderem Vorteil, wenn gemäß einer anderen Weiterbildung der Erfindung der Träger zwei Befestigungsklipse aufweist, wobei die Befestigungsklipse die Sensoreinheit lösbar an dem Träger halten. Insbesondere für eine stabile Anordnung halten die Befestigungsklipse die Sensoreinheit vorzugsweise seitlich an dem Träger. Die Befestigungsklipse sind vorzugsweise Metallbauteile, und der Träger ist vorzugsweise ein Kunststoffbauteil, insbesondere ein Kunststoffspritzgussbauteil.

Grundsätzlich ist es beispielsweise denkbar, dass die Sensoreinheit einen Sensor auf Basis akustischer Wellen, z. B. einen Ultraschallsensor, oder auf Basis elektromagnetischer Wellen, z. B. einen Radarsensor, aufweist. Besonders vorteilhaft ist es hingegen im Zusammenspiel der Sensoreinheit mit den weiteren Bauteilen Träger, Halter und Schneckengetriebe der Sensorvorrichtung, wenn gemäß einer vorteilhaften Weiterbildung der Erfindung die Sensoreinheit einen optischen Sensor aufweist. Der optische Sensor kann insbesondere eine Kamera sein, denkbar ist aber z. B. auch ein Lidarsensor.

Ausführungsbeispiele der Erfindung sind in der Zeichnung skizzenhaft und schematisiert dargestellt und werden im Folgenden näher beschrieben.

Es zeigen:
Fig. 1: Eine Sensorvorrichtung in einer Explosionsdarstellung,
Fig. 2: die Sensorvorrichtung nach Figur 1 zusammengebaut und in einer perspektivischen Ansicht,
Fig. 3: einen Halter und eine Schnecke der Sensorvorrichtung nach Figur 1,
Fig. 4: einen Ausschnitt des Halters nach Figur 3 mit der Schnecke,
Fig. 5: einen Träger der Sensorvorrichtung nach Figur 1,
Fig. 6: einen Ausschnitt des Trägers nach Figur 5 in einer vergrößerten Ansicht,
Fig. 7: den Halter mit der Schnecke und den Träger der Sensorvorrichtung nach Figur 1,
Fig. 8: den Halter, den Träger und eine Sensoreinheit der Sensorvorrichtung nach Figur 1,
Fig. 9: in einem zusammengebauten Zustand den Halter, den Träger und die Sensoreinheit der Sensorvorrichtung nach Figur 1,
Fig. 10: einen Halter einer weiteren Sensorvorrichtung in einer Vorderansicht und
Fig. 11: einen Ausschnitt des Halters nach Figur 10 in einer Rückansicht.

Sich jeweils entsprechende Elemente sind in allen Figuren mit gleichen Bezugszeichen versehen.

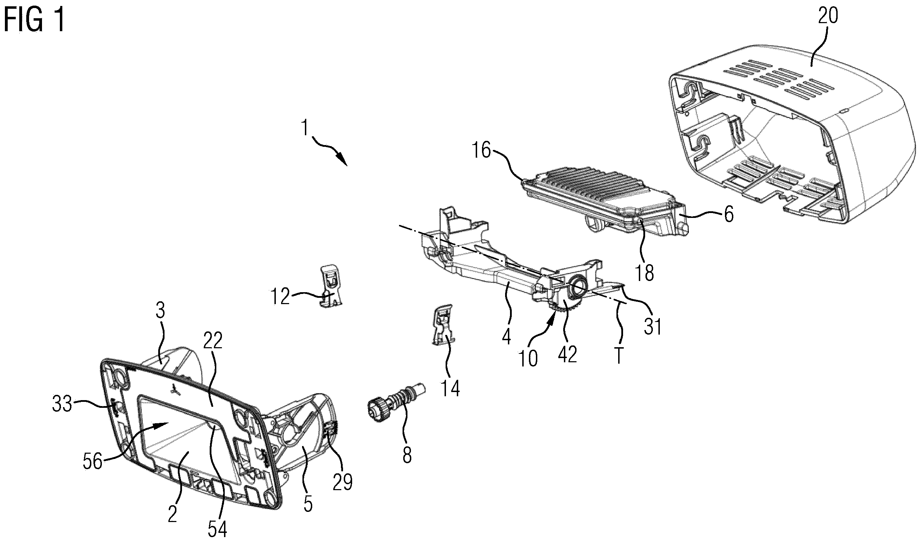

Figur 1 zeigt in einer Explosionsdarstellung eine Sensorvorrichtung 1 zur Befestigung an der Innenseite einer hier nicht dargestellten Fahrzeugscheibe eines Kraftfahrzeugs. Die Sensorvorrichtung 1 weist einen mit der Fahrzeugscheibe verbindbaren Halter 2 und einen schwenkbar mit dem Halter 2 verbundenen Träger 4 auf. Der Träger 4 ist zwischen zwei Seitenarmen 3, 5 des Halters 2 angeordnet und in diesen gelagert. An dem Träger 4 ist eine Sensoreinheit 6 angeordnet.

Der Träger 4 ist um einen einstellbaren Schwenkwinkel gegenüber dem Halter 2 um eine Trägerschwenkachse T verschwenkbar. Der Schwenkwinkel ist mittels einer Fixiereinrichtung arretierbar. Die Fixiereinrichtung weist ein Schneckengetriebe mit einer Schnecke 8 und einem Schneckenrad 10 auf. Die Rotationsachse des Schneckenrades 10 entspricht der Trägerschwenkachse T. Das Arretieren des Schwenkwinkels kann z. B. mittels einer Selbsthemmung des Schneckengetriebes bewirkt werden.

Weiterhin zeigt Figur 1 zwei Befestigungsklipse 12, 14 des Trägers 4, mittels welchen die Sensoreinheit 6 lösbar seitlich an dem Träger 4 gehalten wird. Hierzu greifen seitliche Zapfen 16, 18 der Sensoreinheit 6 in jeweils einen der Befestigungsklipse 12, 14 ein. Die Sensorvorrichtung 1 weist zudem ein insbesondere die Sensoreinheit 6 und das Schneckengetriebe schützendes Gehäuse 20 auf.

Eine Fahrzeugscheibenverbindungsfläche 22 des Halters 2 dient einer Verbindung, beispielsweise mittels einer Verklebung, von Sensorvorrichtung 1 und Fahrzeugscheibe. Die Fahrzeugscheibenverbindungsfläche 22 des Halters 2 und das Gehäuse 20 schließen die Sensorvorrichtung 1 nach außen hin ab.

Der Halter 2 wird z. B. direkt mit der Fahrzeugscheibe verklebt. Der Träger 4 kann mit dem Halter 2 mittels des Schneckengetriebes in verschiedenen Winkeln verbunden werden. Die Schnecke 8 stellt mit dem Schneckenrad 10 eine Einstellbarkeit der Verbindung zwischen Halter 2 und Träger 4 her. Die Sensoreinheit 6 wird in den Träger 4 eingeklipst. Die Befestigungsklipse 12, 14 halten die Sensoreinheit 6 und den Träger 4 zusammen. Das Gehäuse 20 wird auf den Halter 2 aufgeklipst und umschließt die Sensoreinheit 6 sowie - bis auf die Fahrzeugscheibenverbindungsfläche 22 - den Halter 2.

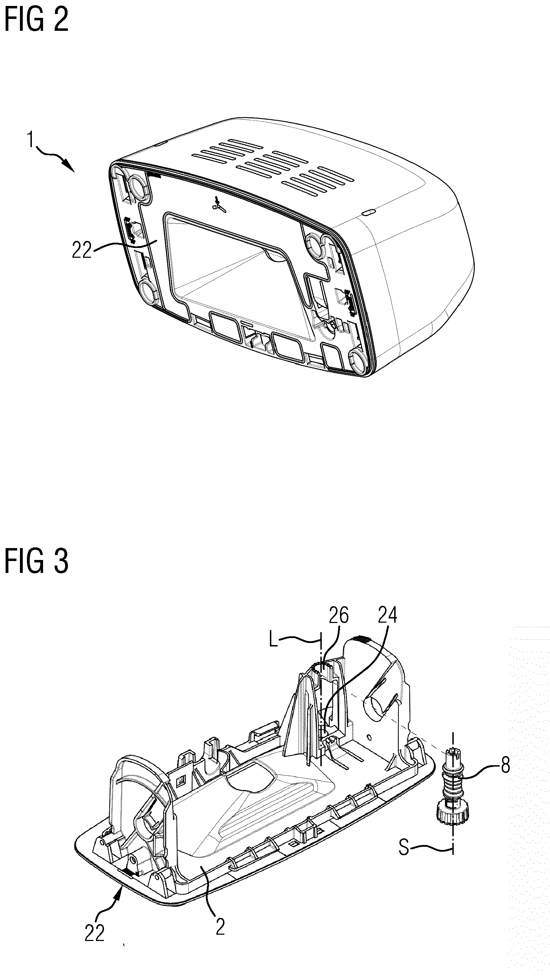

Eine Gesamtansicht der zusammengebauten Sensorvorrichtung 1 ist in Figur 2 dargestellt.

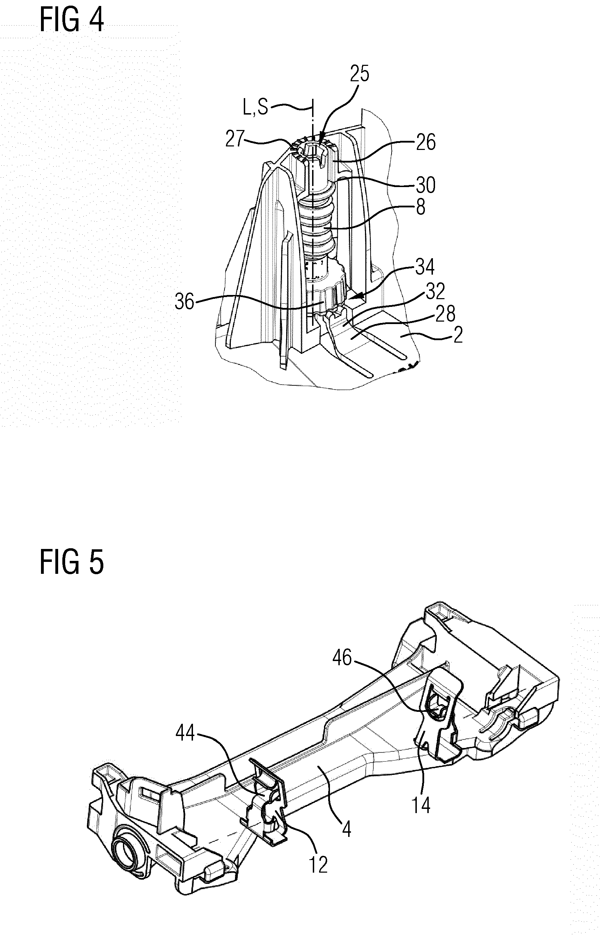

Figuren 3 und 4 zeigen den Halter 2 mit der Schnecke 8, wobei in Figur 3 zur besseren Erkennbarkeit der Ausgestaltung des Halters 2 die Schnecke 8 neben dem Halter 2 in nicht eingebautem Zustand gezeigt ist. Der Halter 2 weist eine Lagerung mit einer von einer ersten Aufnahme gebildeten ersten Lagerstelle 24 und einer von einer zweiten Aufnahme gebildeten zweiten Lagerstelle 26 auf. In der Lagerung ist die Schnecke 8 drehbar gelagert. Die Lagerachse L der Lagerung entspricht der Schneckenachse S. Die Schnecke 8 ist in etwa senkrecht zu der Fahrzeugscheibenverbindungsfläche 22 des Halters 2 angeordnet.

An ihrem der Fahrzeugscheibenverbindungsfläche 22 abgewandten Ende weist die Schnecke 8 stirnseitig eine Werkzeugangriffskontur 25 auf. Die mit diesem Ende der Schnecke 8 korrespondierende zweite Lagerstelle 26 ist mit einer Skalierung 27 versehen. Mithilfe eines Werkzeugs, welches mit der Werkzeugangriffskontur 25 in Verbindung gebracht wird, ist eine einfache Verdrehung der Schnecke 8 und somit Änderung des Schwenkwinkels des Trägers 4 gegenüber dem Halter 2 möglich. Die Skalierung 27 erlaubt eine genaue Einstellung des Schwenkwinkels. Eine zusätzliche Winkelskalierung 29 an einem der Seitenarme 3, 5 des Halters 2 erlaubt zusammen mit einem korrespondierenden, an dem Träger 4 angeordneten Zeiger 31 eine Ablesung des eingestellten Schwenkwinkels. Auch eine weitere Winkelskalierung 33 an der Fahrzeugscheibenverbindungsfläche 22 ermöglicht eine Ablesung des eingestellten Schwenkwinkels.

Eine der beschriebenen Werkzeugangriffskontur 25 entsprechende Werkzeugangriffskontur kann die Schnecke 8 auch an ihrem anderen, der Fahrzeugscheibenverbindungsfläche 22 zugewandten Ende aufweisen. Ein Werkzeug kann dann beispielsweise durch eine Ausnehmung in der Fahrzeugscheibenverbindungsfläche 22 hindurch mit jener Werkzeugangriffskontur in Verbindung gebracht werden zum Verdrehen der Schnecke 8. Die beiden genannten Werkzeugangriffskonturen können auch unterschiedlich ausgebildet sein, so dass z. B. verschiedenartige Werkzeuge für das Verdrehen der Schnecke 8 verwendet werden können.

An dem Halter 2 ist eine Haltefeder 28 zu einem axialen Festlegen der Schnecke 8 angeordnet. Die Haltefeder 28 und die Schnecke 8 sind derart zueinander angeordnet, dass die Haltefeder 28 eine die Schnecke 8 an einen Axialanschlag 30 anlegende Axialkraft auf die Schnecke 8 ausübt. Der Axialanschlag 30 ist in diesem Ausführungsbeispiel Bestandteil der zweiten Lagerstelle 26.

Gleichzeitig ist in dem hier gezeigten Ausführungsbeispiel die Haltefeder 28 auch als Rastfeder 32 einer zwischen Halter 2 und Schnecke 8 zu einem radialen Fixieren der Schnecke 8 angeordneten Rasteinrichtung 34 ausgebildet. Die Rasteinrichtung 34 weist zudem mehrere, an der Schnecke 8 radial um die Schneckenachse S angeordnete Rastelemente 36 auf. In dem hier gezeigten Ausführungsbeispiel sind die Rastelemente 36 als Rastausnehmungen ausgebildet. Die Rastelemente 36 sind an der Schnecke 8 axial ausgerichtet, und die Rastfeder 32 und zwei der Rastelemente 36 sind zum radialen Fixieren der Schnecke 8 miteinander in Eingriff.

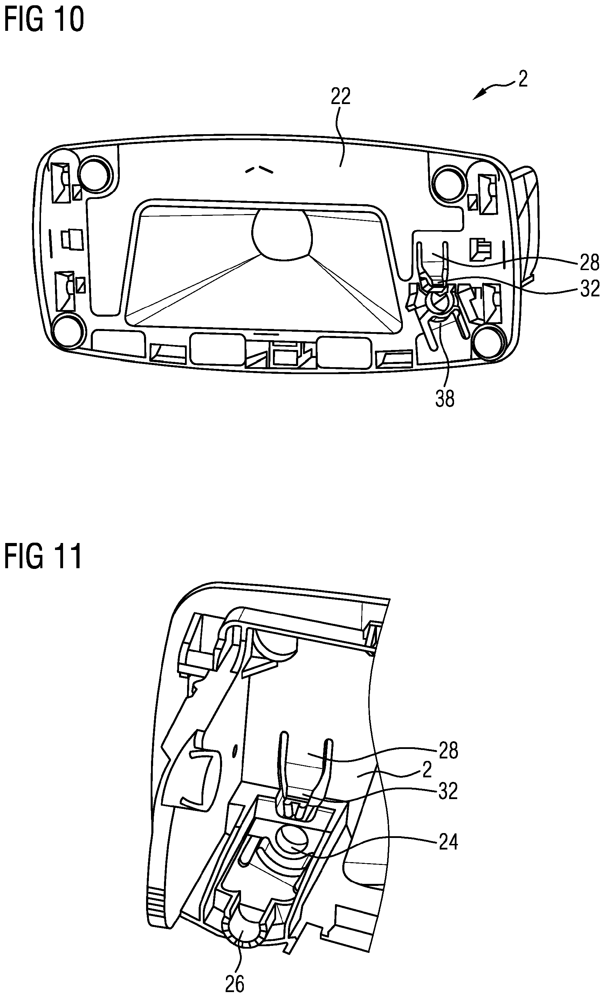

Eine alternative Ausführung eines Halters 2 zeigen Figuren 10, 11. Hier ist zusätzlich zu einer Haltefeder 28, die auch in diesem Ausführungsbeispiel gleichzeitig als Rastfeder 32 ausgebildet ist, zusätzlich eine weitere Feder 38 an dem Halter 2 angeordnet. Diese Feder 38 drückt die - in Figuren 10, 11 nicht dargestellte - Schnecke 8 zur spielfreien Lagerung zusätzlich in eine Endlage.

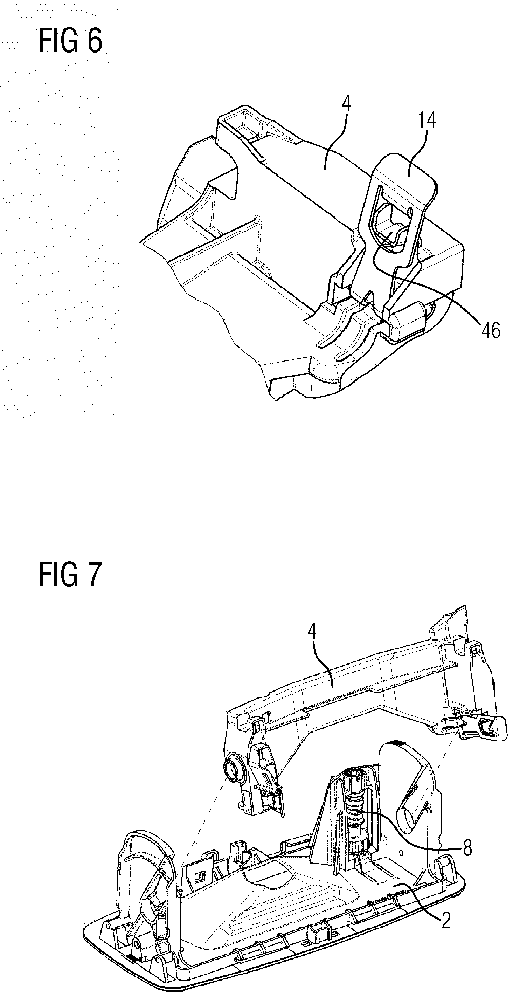

Die Schnecke 8 ist ortsfest an dem Halter 2 und das Schneckenrad 10 starr an dem Träger 4 angeordnet (vgl. Figuren 4, 1). Das Schneckenrad 10 ist als Schneckenradsegment 42 und einteilig mit dem Träger 4 ausgebildet. Der Träger 4 weist ferner die Befestigungsklipse 12, 14 auf (vgl. Figuren 5, 6). Zur Verbindung mit den Zapfen 16, 18 der Sensoreinheit 6 sind die Befestigungsklipse 12, 14 mit Aufnahmen 44, 46 versehen, welche mit den Zapfen 16, 18 korrespondieren.

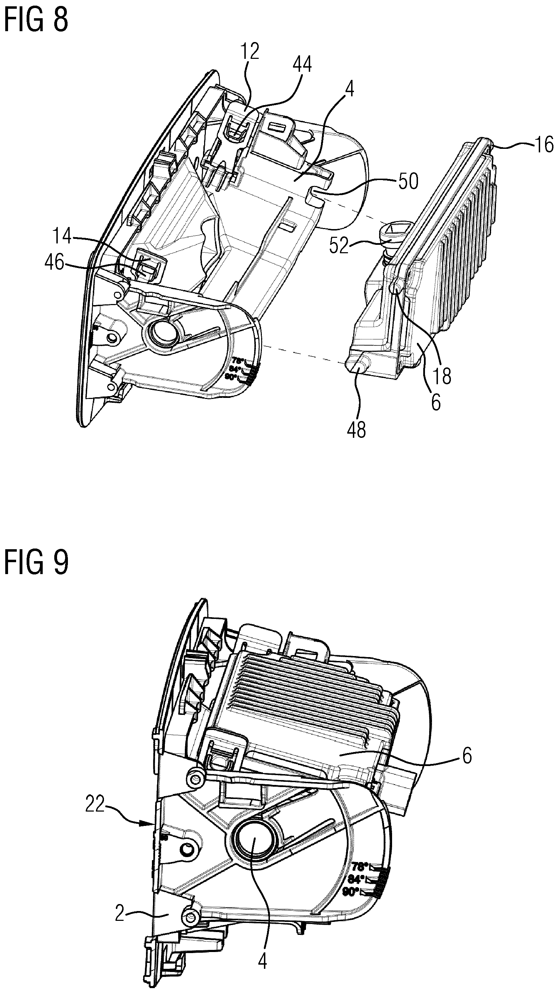

Figur 7 verdeutlicht, wie bei der Montage der Sensorvorrichtung 1 der Träger 4 mit dem Halter 2 verbunden wird. Nach dem Verbinden von Träger 4 und Halter 2 wird, wie mit Figur 8 symbolisiert, die Sensoreinheit 6 in den Träger 4 eingesetzt und mit diesem verbunden. Dazu werden zunächst seitliche Kippzapfen 48 der Sensoreinheit 6 in korrespondierende Kippaufnahmen 50 des Trägers 4 eingesetzt. Nachfolgend wird die Sensoreinheit 6 gegenüber dem Träger 4 verkippt bis die Zapfen 16, 18 der Sensoreinheit 6 in die Aufnahmen 44, 46 der Befestigungsklipse 12, 14 einschnappen. Eine fertig montierte Einheit aus Halter 2, Träger 4 und Sensoreinheit 6 ist in Figur 9 dargestellt.

In dem hier gezeigten Ausführungsbeispiel weist die Sensoreinheit 6 einen optischen Sensor 52 auf (vgl. Figur 8), der als Kamera ausgebildet ist. Im zusammengebauten Zustand der Sensorvorrichtung 1 ist der optische Sensor 52 im Bereich einer Öffnung 54 (vgl. Figur 1) des Halters 2 angeordnet. Von der Öffnung 54 ausgehend ist der Halter 2 in Richtung der Fahrzeugscheibenverbindungsfläche 22 und somit auch der Fahrzeugscheibe als Trichter 56 ausgebildet. Die Oberfläche des Trichters 56 ist, z. B. aufgrund einer entsprechenden Oberflächenbehandlung des Halters 2 im Bereich des Trichters 56, reflexionsarm ausgebildet. Damit schützt der Trichter 56 die Sensoreinheit 6, insbesondere in diesem Ausführungsbeispiel den optischen Sensor 52, vor Streulicht und gewährleistet so eine störungsfreie Funktion der Sensoreinheit 6.

Insgesamt zeigt die Erfindung, wie bei stabilem und kompaktem Aufbau einer Sensorvorrichtung eine präzise Verschwenkbarkeit und Fixierung eines eine Sensoreinheit aufweisenden Trägers der Sensorvorrichtung gegenüber einem an einer Fahrzeugscheibe eines Kraftfahrzeugs anbringbaren Halter der Sensorvorrichtung erreicht wird.

Z. B. besteht die Anforderung, die optische Achse einer als Multifunktionskamera ausgebildeten Sensoreinheit exakt horizontal auszurichten. Um dieses in verschiedenen Fahrzeugtypen bewerkstelligen zu können, stellt die beschriebene Sensorvorrichtung eine flexible Halterlösung zur Verfügung. Die Sensorvorrichtung ist so aufgebaut, dass sie z. B. von einem Endkunden schnell und einfach an einen jeweiligen Fahrzeugtyp angepasst werden kann. Damit wird es ermöglicht, unterschiedliche Fahrzeugtypen abzudecken und die Variantenanzahl zu minimieren.

## Patentansprüche

1. Sensorvorrichtung (1) zur Befestigung an der Innenseite einer Fahrzeugscheibe eines Kraftfahrzeugs, mit einem mit der Fahrzeugscheibe verbindbaren Halter (2), mit einem schwenkbar mit dem Halter (2) verbundenen Träger (4) und mit einer an dem Träger (4) angeordneten Sensoreinheit (6), wobei der Träger (4) um einen einstellbaren Schwenkwinkel gegenüber dem Halter (2) um eine Trägerschwenkachse (T) verschwenkbar ist und wobei der Schwenkwinkel mittels einer Fixiereinrichtung arretierbar ist, wobei die Fixiereinrichtung ein Schneckengetriebe mit einer Schnecke (8) und einem Schneckenrad (10) aufweist, wobei die Rotationsachse des Schneckenrades (10) der Trägerschwenkachse (T) entspricht, **dadurch gekennzeichnet, dass** zwischen Halter (2) und Schnecke (8) eine Rasteinrichtung (34) zu einem radialen Fixieren der Schnecke (8) angeordnet ist, für eine rotatorische Fixierung bezogen auf die Schneckenachse.

2. Sensorvorrichtung nach Anspruch 1, **dadurch gekennzeichnet, dass** die Schnecke (8) an dem Halter (2) und das Schneckenrad (10) an dem Träger (4) angeordnet ist.

3. Sensorvorrichtung nach Anspruch 1 oder 2, **dadurch gekennzeichnet, dass** das Schneckenrad (10) einteilig mit dem Träger (4) ausgebildet ist.

4. Sensorvorrichtung nach einem der vorhergehenden Ansprüche, **dadurch gekennzeichnet, dass** das Schneckenrad (10) als Schneckenradsegment (42) ausgebildet ist.

5. Sensorvorrichtung nach einem der vorhergehenden Ansprüche, **dadurch gekennzeichnet, dass** der Halter (2) eine Lagerung mit einer von einer ersten Aufnahme gebildeten ersten Lagerstelle (24) und einer von einer zweiten Aufnahme gebildeten zweiten Lagerstelle (26) aufweist, wobei die Schnecke (8) in der Lagerung drehbar gelagert ist.

6. Sensorvorrichtung nach einem der vorhergehenden Ansprüche, **dadurch gekennzeichnet, dass** die Schnecke (8) senkrecht zu einer Fahrzeugscheibenverbindungsfläche (22) des Halters (2) angeordnet ist.

7. Sensorvorrichtung nach einem der vorhergehenden Ansprüche, **dadurch gekennzeichnet, dass** die Rasteinrichtung (34) eine an dem Halter (2) angeordnete Rastfeder (32) sowie mehrere, an der Schnecke (8) radial um die Schneckenachse (S) angeordnete Rastelemente (36) aufweist.

8. Sensorvorrichtung nach Anspruch 7, **dadurch gekennzeichnet, dass** die Rastelemente (36) an der Schnecke (8) axial ausgerichtet sind und dass die Rastfeder (32) und zumindest eines der Rastelemente (36) zum radialen Fixieren der Schnecke (8) miteinander in Eingriff sind.

9. Sensorvorrichtung nach einem der vorhergehenden Ansprüche, **dadurch gekennzeichnet, dass** an dem Halter (2) eine Haltefeder (28) zu einem axialen Festlegen der Schnecke (8) angeordnet ist, wobei Haltefeder (28) und Schnecke (8) derart zueinander angeordnet sind, dass die Haltefeder (28) eine die Schnecke (8) an einen Axialanschlag (30) anlegende Axialkraft auf die Schnecke (8) ausübt.

10. Sensorvorrichtung nach einem der vorhergehenden Ansprüche, **dadurch gekennzeichnet, dass** der Träger (4) zwei Befestigungsklipse (12, 14) aufweist, wobei die Befestigungsklipse (12, 14) die Sensoreinheit (6) lösbar an dem Träger (4) halten.

11. Sensorvorrichtung nach einem der vorhergehenden Ansprüche, **dadurch gekennzeichnet, dass** die Sensoreinheit (6) einen optischen Sensor (52) aufweist.

## Claims

1. Sensor device (1) for fastening to the inside of a vehicle window of a motor vehicle, having a holder (2) that is connectable to the vehicle window, having a carrier (4) that is connected pivotably to the holder (2), and having a sensor unit (6) that is arranged on the carrier (4), the carrier (4) being pivotable relative to the holder (2) by a settable pivot angle about a carrier pivot axis (T), and the pivot angle being lockable by means of a fixing device, wherein the fixing device has a worm mechanism with a worm (8) and with a worm wheel (10), the axis of rotation of the worm wheel (10) corresponding to the carrier pivot axis (T), **characterized in that** a detent device (34) for radially fixing the worm (8) is arranged between holder (2) and worm (8) for rotational fixing in relation to the worm axis.

2. Sensor device according to Claim 1, **characterized in that** the worm (8) is arranged on the holder (2) and the worm wheel (10) is arranged on the carrier (4).

3. Sensor device according to Claim 1 or 2, **characterized in that** the worm wheel (10) is formed integrally with the carrier (4).

4. Sensor device according to any one of the preceding claims, **characterized in that** the worm wheel (10) is configured as a worm wheel segment (42).

5. Sensor device according to any one of the preceding claims, **characterized in that** the holder (2) has a mounting arrangement with a first mounting point (24), which is formed by a first receptacle, and with a second mounting point (26), which is formed by a second receptacle, the worm (8) being mounted rotatably in the mounting arrangement.

6. Sensor device according to any one of the preceding claims, **characterized in that** the worm (8) is arranged perpendicular to a vehicle window connecting surface (22) of the holder (2).

7. Sensor device according to any one of the preceding claims, **characterized in that** the detent device (34) has a detent spring (32), which is arranged on the holder (2), and multiple detent elements (36), which are arranged on the worm (8) radially around the worm axis (S).

8. Sensor device according to Claim 7, **characterized in that** the detent elements (36) are aligned axially on the worm (8), and **in that** the detent spring (32) and at least one of the detent elements (36) engage with one another for the purposes of radially fixing the worm (8).

9. Sensor device according to any one of the preceding claims, **characterized in that** a holding spring (28) for axially locating the worm (8) is arranged on the holder (2), holding spring (28) and worm (8) being arranged relative to one another such that the holding spring (28) subjects the worm (8) to an axial force that causes the worm (8) to bear against an axial stop (30).

10. Sensor device according to any one of the preceding claims, **characterized in that** the carrier (4) has two fastening clips (12, 14), the fastening clips (12, 14) holding the sensor unit (6) detachably on the carrier (4).

11. Sensor device according to any one of the preceding claims, **characterized in that** the sensor unit (6) has an optical sensor (52).

## Revendications

1. Dispositif de capteur (1) destiné à être fixé au côté intérieur d'une vitre d'un véhicule automobile, comportant un dispositif de retenue (2) pouvant être relié à la vitre de véhicule, comportant un support (4) relié de manière pivotante au dispositif de retenue (2) et comportant une unité de capteur (6) disposée sur le support (4), le support (4) pouvant pivoter par rapport au dispositif de retenue (2) d'un angle de pivotement réglable autour d'un axe de pivotement de support (T) et l'angle de pivotement pouvant être bloqué à l'aide d'un dispositif de fixation, le dispositif de fixation présentant une transmission à vis sans fin comportant une vis sans fin (8) et une roue à vis sans fin (10), l'axe de rotation de la roue à vis sans fin (10) correspondant à l'axe de pivotement de support (T), **caractérisé en ce qu'**un dispositif d'encliquetage (34) servant à une fixation radiale de la vis sans fin (8) est disposé entre le dispositif de retenue (2) et la vis sans fin (8) pour une fixation en rotation par rapport à l'axe de vis sans fin.

2. Dispositif de capteur selon la revendication 1, **caractérisé en ce que** la vis sans fin (8) est disposée sur le dispositif de retenue (2) et la roue à vis sans fin (10) est disposée sur le support (4).

3. Dispositif de capteur selon la revendication 1 ou 2, **caractérisé en ce que** la roue à vis sans fin (10) est réalisée d'un seul tenant avec le support (4).

4. Dispositif de capteur selon l'une des revendications précédentes, **caractérisé en ce que** la roue à vis sans fin (10) est réalisée sous forme de segment de roue à vis sans fin (42).

5. Dispositif de capteur selon l'une des revendications précédentes, **caractérisé en ce que** le dispositif de retenue (2) présente un dispositif de montage comportant un premier point de montage (24) formé par un premier logement et un deuxième point de montage (26) formé par un deuxième logement, la vis sans fin (8) étant montée rotative dans le dispositif de montage.

6. Dispositif de capteur selon l'une des revendications précédentes, **caractérisé en ce que** la vis sans fin (8) est disposée perpendiculairement à une surface de connexion de vitre de véhicule (22) du dispositif de retenue (2).

7. Dispositif de capteur selon l'une des revendications précédentes, **caractérisé en ce que** le dispositif d'encliquetage (34) présente un ressort d'encliquetage (32) disposé sur le dispositif de retenue (2) ainsi que plusieurs éléments d'encliquetage (36) disposés sur la vis sans fin (8) radialement autour de l'axe de vis sans fin (S).

8. Dispositif de capteur selon la revendication 7, **caractérisé en ce que** les éléments d'encliquetage (36) sont orientés axialement sur la vis sans fin (8) et **en ce que** les ressorts d'encliquetage (32) et au moins l'un des éléments d'encliquetage (36) sont en prise les uns avec les autres pour la fixation radiale de la vis sans fin (8).

9. Dispositif de capteur selon l'une des revendications précédentes, **caractérisé en ce qu'**un ressort de retenue (28) servant à une localisation axiale de la vis sans fin (8) est disposé sur le dispositif de retenue (2), le ressort de retenue (28) et la vis sans fin (8) étant disposés l'un par rapport à l'autre de telle sorte que le ressort de retenue (28) exerce sur la vis sans fin (8) une force axiale appliquant la vis sans fin (8) contre une butée axiale (30).

10. Dispositif de capteur selon l'une des revendications précédentes, **caractérisé en ce que** le support (4) présente deux clips de fixation (12, 14), les clips de fixation (12, 14) retenant l'unité de capteur (6) de manière amovible sur le support (4).

11. Dispositif de capteur selon l'une des revendications précédentes, **caractérisé en ce que** l'unité de capteur (6) présente un capteur optique (52).
